# EUROPEAN PATENT APPLICATION

(11) **EP 4 672 732 A1**
(43) Date of publication of application: **31.12.2025**
(21) Application number: 25185878.3
(22) Date of filing: 27.06.2025
(51) Int. Cl.: H04N 1/387, H04N 23/45, H04N 23/667, H04N 13/204, H04N 13/243, H04N 13/25, G06F 16/738, H04N 21/8549, H04N 101/00

(54) **INFORMATION PROCESSING APPARATUS AND IMAGING APPARATUS FOR GENERATING PAIRED IMAGE DATA**

(30) Priority: 28.06.2024 JP 2024104740
(71) Applicant: FUJIFILM Corporation, Tokyo 106-8620 (JP)
(72) Inventor: IMAGAWA, Kentaro, Saitama-shi, Saitama, 331-9624 (JP); SUGAYA, Shota, Saitama-shi, Saitama, 331-9624 (JP); TONAI, Daisuke, Saitama-shi, Saitama, 331-9624 (JP); NAGAI, Toshiaki, Saitama-shi, Saitama, 331-9624 (JP)
(74) Representative: Dehns Germany Partnerschaft mbB

(57) **Abstract**

An object of the present invention is to provide an information processing apparatus and an imaging apparatus that generate a set of image data as an image that can be viewed by a user without a sense of discomfort in any case where the standards of the two pieces of first image data and second image data are the same or different.

A paired image data generation unit generates paired image data of a paired image which is a set of image data from at least first image data of a first image and second image data of a second image. A paired image standard generation unit generates a paired image standard of a paired image data based on a first standard of the first image data and a second standard of the second image data.

## Description

### BACKGROUND OF THE INVENTION

### 1. Field of the Invention

The present disclosure relates to an information processing apparatus and an imaging apparatus.

### 2. Description of the Related Art

WO2015/125815A discloses that, in a case where two scenes in which a difference in imaging time is equal to or less than a threshold value are combined scenes and both of the two scenes are classified as major scenes, the two scenes are displayed in parallel with each other with the same size.

### SUMMARY OF THE INVENTION

An object of an exemplary embodiment of the invention is to provide an information processing apparatus and an imaging apparatus that generate a set of image data as an image that can be viewed by a user without a sense of discomfort in any case where the standards of the two pieces of first image data and second image data are the same or different.

An information processing apparatus according to an aspect of the present invention comprises a processor, and the processor is configured to: generate third image data, which is a set of image data, from at least first image data and second image data; and generate a third standard of the third image data based on a first standard of the first image data and a second standard of the second image data.

It is preferable that the set of image data is one piece of image data. It is preferable that the set of image data is image data in which three or more pieces of image data, including the first image data and the second image data, are configured as one set. It is preferable that the third image data is image data in which the first image data and the second image data are displayed in parallel on a display screen.

It is preferable that the processor is configured to: in a case where the first standard and the second standard are different from each other, match the third standard to either the first standard or the second standard; or change the third standard to a standard different from the first standard and the second standard. It is preferable that the first standard, the second standard, and the third standard include at least one of an image format or an image file format. It is preferable that, in a case where the processor matches the third standard to either the first standard or the second standard, one of the first standard and the second standard is a still image and the other is a video. It is preferable that the processor is configured to, in a case where the third standard is a video, duplicate the still image a predetermined number of times, and combine the duplicated still images to match the video.

It is preferable that the processor is configured to: in a case where a first characteristic of the first image data and a second characteristic of the second image data are different from each other, match a third characteristic of the third image data to either the first characteristic or the second characteristic; or change the third characteristic to a third characteristic different from the first characteristic and the second characteristic. It is preferable that the first characteristic, the second characteristic, and the third characteristic are specifications of image data, and include at least one of an aspect ratio, an image size, a resolution, a frame rate, a bit rate, or a recording time.

It is preferable that the processor is configured to perform at least one of an aspect ratio change, a bit rate change, a recording time change, or a frame rate change, on at least one of the first characteristic or the second characteristic. It is preferable that the processor is configured to perform at least one processing of background addition, cropping, or enlargement or reduction based on the first characteristic and the second characteristic, on at least one of the first image data or the second image data.

It is preferable that the processor is configured to, in a case where the bit rate change is performed, set a bit rate determined by the third characteristic to be equal to or less than a bit rate determined by the first characteristic or the second characteristic. It is preferable that the processor is configured to, in a case where the recording time change is performed, set a recording time determined by the third characteristic to be equal to or shorter than a recording time determined by the first characteristic or the second characteristic. It is preferable that the processor is configured to, in a case where the frame rate change is performed, match at least one of a frame rate determined by the first characteristic or a frame rate determined by the second characteristic to the third characteristic.

It is preferable that the processor is configured to, in a case of generating the third image data, maintain an orientation of an image determined by the first image data and an orientation of an image determined by the second image data.

It is preferable that the processor is configured to, in a case of generating the third image data, output information related to a processing time for the generation. It is preferable that, in a case where the first image data or the second image data is not present, or the first image data or the second image data is the set of image data, the processor does not generate the third image data.

It is preferable that the processor is configured to, in a case where the third image data is output to a display screen, switch and display, on the display screen, a first image of the first image data and a second image of the second image data. It is preferable that the processor is configured to display, on the display screen, one of the first image and the second image by sliding in, and the other by sliding out, while switching between the display of the first image and the display of the second image.

It is preferable that the processor is configured to generate video data, which is a set of video, by combining a plurality of pieces of still image data in a case where a mode is set to a second mode, and the video data is image data for scrolling the plurality of pieces of still image data in a specific direction within a specific time with respect to a display screen.

An imaging apparatus according to another aspect of the exemplary embodiment comprises the information processing apparatus according to the aspect of the present invention described above. It is preferable that the imaging apparatus further comprises a first mode, and the processor is configured to, in a case where a transition to the first mode is performed, generate the third image data. It is preferable that the first mode is a mode for generating the set of image data from a plurality of pieces of image data.

It is preferable that the processor is configured to, in a case of generating the third image data, acquire both the first image data and the second image data by imaging the first image data and the second image data with the imaging apparatus. It is preferable that, in a case where the processor generates the third image data, one of the first image data or the second image data is an image optionally selected from captured image data.

An imaging apparatus according to still another aspect of the exemplary embodiment comprises a processor, and the processor is configured to generate third image data with a third aspect ratio from first image data with a first aspect ratio and second image data with a second aspect ratio, ratios of the first aspect ratio, the second aspect ratio, and the third aspect ratio in a horizontal direction are the same, and the third image data is a still image in a case where both the first image data and the second image data are still images, and is a video in a case where at least one of the first image data or the second image data is a video.

It is preferable that the first aspect ratio and the second aspect ratio are 3:4, and the third aspect ratio is 3:2.

According to the exemplary embodiments of the invention, a set of image data can be generated as an image that can be viewed by a user without a sense of discomfort in any case where the standards of the two pieces of first image data and second image data are the same or different.

### BRIEF DESCRIPTION OF THE DRAWINGS

Fig. 1 is a front perspective view of an imaging apparatus.
Fig. 2 is a rear perspective view of the imaging apparatus.
   (A) of Fig. 3 is an explanatory diagram showing a normal position of a lever, (B) of Fig. 3 is an explanatory diagram showing a state in which the lever is pulled, and (C) of Fig. 3 is an explanatory diagram showing a state in which the lever is pushed.
Fig. 4 is a block diagram showing a schematic configuration of the imaging apparatus.
Fig. 5 is a block diagram showing a function of an image data processing unit.
Fig. 6 is a block diagram showing a function of a controller.
Fig. 7 is an explanatory diagram showing a method of acquiring first image data and second image data by imaging.
Fig. 8 is an explanatory diagram showing a method of acquiring first image data from a reproduction screen and acquiring second image data by imaging.
Fig. 9 is an explanatory diagram showing a method of generating paired image data.
Fig. 10 is an explanatory diagram showing a method of generating paired image data in a case where a paired image standard is a video.
Fig. 11 is an explanatory diagram showing a method of generating paired image data in a case where a bit rate is changed.
Fig. 12 is an explanatory diagram showing a method of generating paired image data in a case where recording time is changed.
Fig. 13 is an explanatory diagram showing a method of generating paired image data in a case where a frame rate is changed and a recording time is changed.
Figs. 14A to 14D are explanatory diagrams showing a method of generating paired image data in a case where orientations of a first image and a second image are maintained.
Fig. 15A is an explanatory diagram showing a case where the orientation of the image is normal, Fig. 15B is an explanatory diagram showing a case where the orientation of the image is right 90-degree rotation direction, and Fig. 15C is an explanatory diagram showing a case where the orientation of the image is left 90-degree rotation direction.
Fig. 16A is an explanatory diagram showing background addition, Fig. 16B is an explanatory diagram showing cropping, and Fig. 16C is an explanatory diagram showing image size reduction.
Fig. 17 is an explanatory diagram showing guidance GDX indicating that the paired image data is being generated, and a time until the completion of the generation of the paired image data.
Fig. 18 is an image diagram showing a transition-unavailable icon.
Fig. 19 is an explanatory diagram showing a method of reproducing a paired image.
Fig. 20 is an explanatory diagram showing a method of generating a roll video.
Fig. 21 is an explanatory diagram showing a first aspect ratio, a second aspect ratio, and a paired image aspect ratio.
Fig. 22 is an explanatory diagram showing a method of generating multi-image data.

### DESCRIPTION OF THE PREFERRED EMBODIMENTS

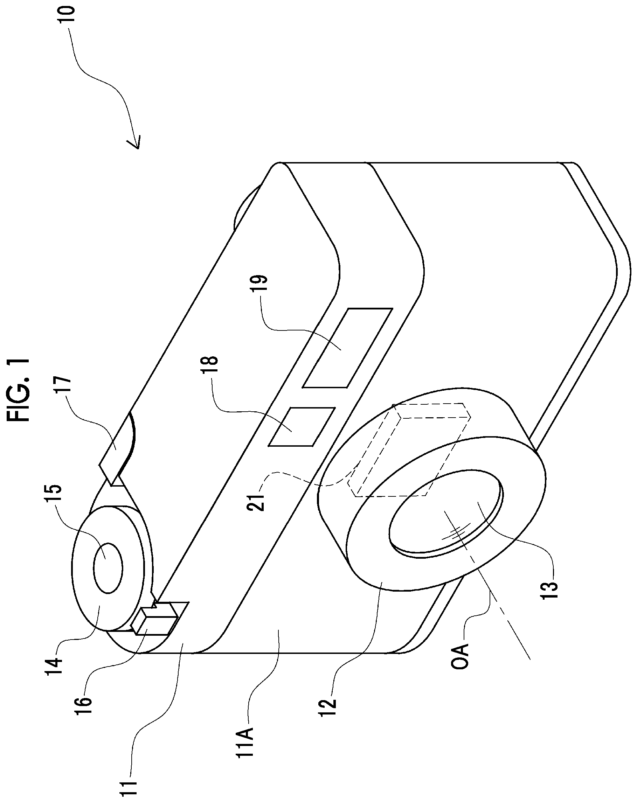

As shown in Fig. 1, the imaging apparatus 10 comprises a camera body 11 and a lens barrel 12. The camera body 11 has a horizontally long box shape in which a dimension in a left-right direction is larger than a dimension in an up-down direction in a front view. In addition, the imaging apparatus 10 is preferably a digital camera or the like.

A grip 11A is provided in a left end portion of the camera body 11 in a front view. The grip 11A has a semi-cylindrical shape that connects a front surface and a rear surface of the camera body 11 and has a shape that is easy for a user to grip. The lens barrel 12 is disposed on the front surface of the camera body 11 and is provided with an imaging optical system 13. The imaging optical system 13 forms an image of subject light on the imaging element 21 provided on the optical axis OA.

A mode dial 14, a release switch 15, a power switch 16, a lever 17, and the like are provided on an upper surface of the camera body 11. The imaging apparatus 10 comprises a full-size mode, a two-in-one mode (first mode), a roll video mode (second mode), a still image capturing mode, a video capturing mode, an image reproduction mode, and the like. In the present embodiment, a mode other than the two-in-one mode can be switched by, for example, the mode dial 14. The two-in-one mode may also be switched by the mode dial 14.

In addition to the lens barrel 12, a flash device 18 and an illumination device 19 are provided on the front surface of the camera body 11. In the still image capturing mode of the imaging apparatus 10, the flash device 18 irradiates an object with illumination light forcibly or in a case where an exposure value of the object is less than a predetermined value in operative association with the release of a shutter. On the other hand, the illumination device 19 constantly irradiates the object with the illumination light in a case where the imaging apparatus 10 is in the video capturing mode.

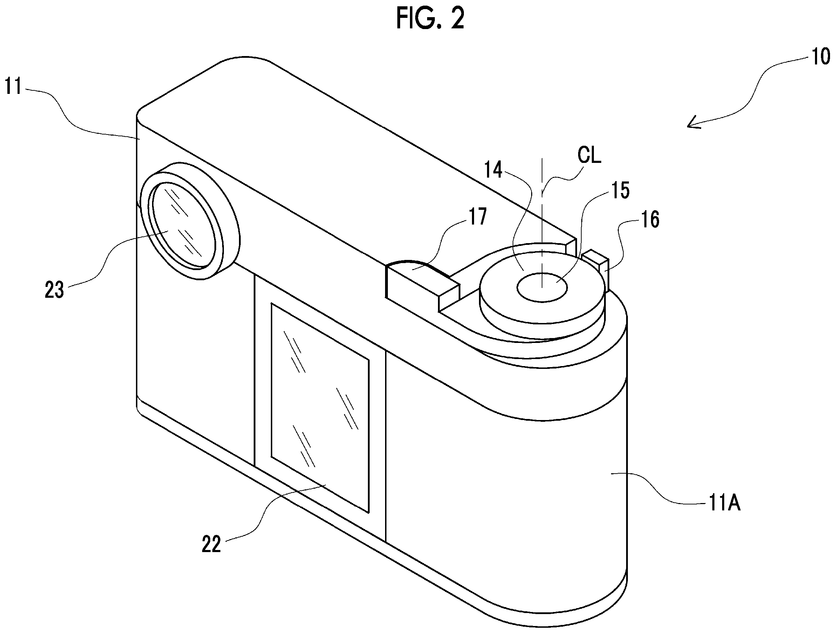

As shown in Fig. 2, the lever 17 is provided above the grip 11A. The lever 17 is provided by being stacked together with the mode dial 14 and the release switch 15. The lever 17 is attached to be rotatable about a central axis CL of the mode dial 14.

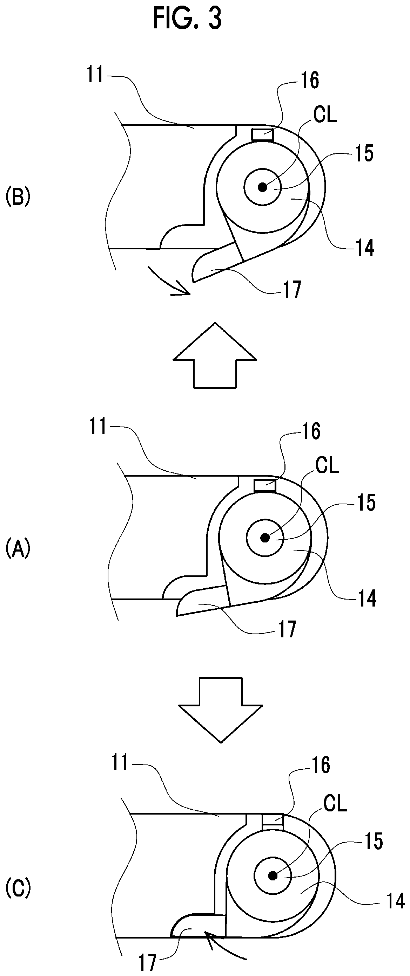

As shown in (A) of Fig. 3, the lever 17 is set to a normal position rotated slightly counterclockwise from the rear surface of the camera body 11 by turning on the power switch 16. Then, the lever 17 can perform two types of operations, that is, an operation of pulling the lever 17 in a counterclockwise direction from the normal position as shown in (B) of Fig. 3, and an operation of pushing the lever 17 in a clockwise direction from the normal position as shown in (C) of Fig. 3. Regarding the operation of pulling the lever 17, in addition to the transition to the two-in-one mode described below, the recorded image displayed on the display 22 can be changed to the past recorded image in the image reproduction mode by sequentially tracing back from the latest recorded image. On the other hand, regarding the operation of pushing the lever 17, as will be described later, in addition to the confirmation of the paired image data, the recorded image displayed on the display 22 can be changed to a newer recorded image by sequentially proceeding from the recorded image captured in the past.

The power switch 16 is a push-type switch and is disposed in the vicinity of the mode dial 14 and the lever 17. A power-on state and a power-off state of the imaging apparatus 10 are alternately switched in response to the pressing of the power switch 16.

The imaging element 21 (refer to Fig. 3) is provided in the camera body 11. The imaging element 21 is held by a holder (not shown) and is fixed to an image plane side of the lens barrel 12. The imaging element 21 has a still image and video capture function and is, for example, a complementary metal oxide semiconductor (CMOS) image sensor, a charge coupled device (CCD) image sensor, or an organic thin film imaging element. The imaging element 21 is an imaging element in which a length in the vertical direction is smaller than a length in the horizontal direction in a case where the imaging element 21 is horizontally placed, that is, the upper surface of the camera body 11 faces upward in the vertical direction. In addition, the imaging element 21 is not limited thereto and may be an imaging element in which the length in the vertical direction is larger than the length in the horizontal direction in a case where the imaging element is horizontally placed, that is, the upper surface of the camera body 11 faces upward in the vertical direction.

The display 22 and an electronic view finder 23 are provided on the rear surface of the camera body 11. The display 22 is a liquid crystal display (LCD), an organic electroluminescent display (OELD), or the like. The display 22 is used for live view display, recorded image display, setting menu display, and the like. In the live view display, the recorded image obtained by imaging the object with the imaging element 21 is displayed on the display 22 in real time.

The electronic view finder 23 is provided in an upper portion of the camera body 11. A live view is displayed on the electronic view finder 23, and the recorded image obtained by imaging the object with the imaging element 21 is displayed on the electronic view finder 23 in real time. The electronic view finder 23 can be turned on and off to switch display on the display 22 as necessary.

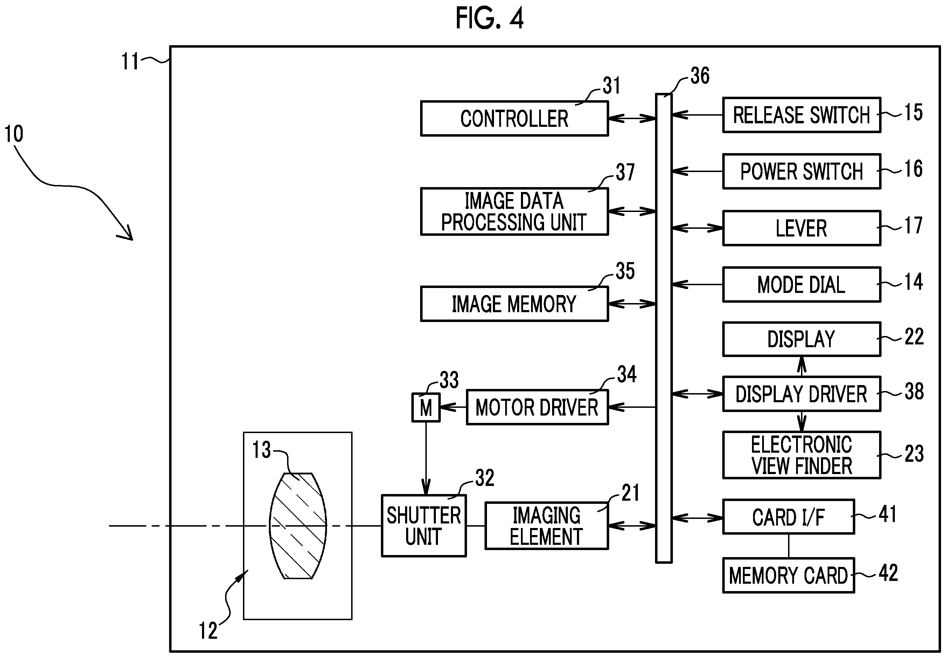

As shown in Fig. 4, the controller 31 consists of a microcomputer comprising a CPU, a read only memory (ROM) that stores programs and parameters used by the CPU, a random access memory (RAM) that is used as a work memory of the CPU (all not shown), and the like and controls each unit of the imaging apparatus 10. In addition, the controller 31 performs control related to a two-in-one mode, which will be described in detail later.

The information processing apparatus according to the embodiment of the present invention comprises a configuration in which the information processing is provided in the imaging apparatus 10, and preferably includes at least the liquid crystal display 22, the controller 31, the image data processing unit 37, and the display driver 38. The information processing apparatus according to the embodiment of the present invention can be applied to various information apparatuses such as a tablet terminal and a personal computer, in addition to the imaging apparatus 10 such as a digital camera.

In a case where the lever 17 is rotated, a signal for detecting the amount of rotation is transmitted to the controller 31. In addition, a mode switching signal from the mode dial 14, a release signal from the release switch 15, and a power on or off signal from the power switch 16 are input to the controller 31.

A shutter unit 32 is, for example, a focal plane shutter and is disposed between the imaging optical system 13 and the imaging element 21. The shutter unit 32 is provided to be able to block an optical path between the imaging optical system 13 and the imaging element 21 and is changed between an open state and a closed state. The shutter unit 32 is changed to the open state in a case where a live view image and a video are captured. In a case of still image capturing, the shutter unit 32 is variable from an open state to a closed state in a case where the release switch 15 is not operated, and is variable from the closed state to the open state in a case where the release switch 15 is operated. In addition, in a case where a preview image is captured in the video capturing mode, the shutter unit 32 operates in the same manner as in a case where the video is captured. In a case where a preview image is captured in the still image capturing mode, the shutter unit 32 operates in the same manner as in a case where a still image is captured. The shutter unit 32 is driven by a shutter motor 33. A motor driver 34 controls the driving of the shutter motor 33.

The driving of the imaging element 21 is controlled by the controller 31. The imaging element 21 has a light-receiving surface composed of a plurality of pixels (not shown) that are arranged in a two-dimensional matrix. Each pixel includes a photoelectric conversion element and performs photoelectric conversion on an object image formed on the light-receiving surface by the imaging optical system 13 to generate an imaging signal.

Further, the imaging element 21 comprises signal processing circuits such as a noise removal circuit, an auto gain controller, and an A/D conversion circuit (all not shown). The noise removal circuit executes noise removal processing on the imaging signal. The auto gain controller amplifies a level of the imaging signal to an optimum value. The A/D conversion circuit converts the imaging signal into a digital signal and outputs the digital signal from the imaging element 21 to a bus line 36. The output signal of the imaging element 21 is image data (so-called RAW data) having one color signal for each pixel.

An image memory 35 stores image data corresponding to one frame output to the bus line 36. An image data processing unit 37 reads out the image data corresponding to one frame from the image memory 35 and performs known image processing such as matrix calculation, a demosaicing process, a γ correction process, brightness and color difference conversion, and a resizing process. In addition, the image data processing unit 37 performs processing related to a two-in-one mode, which will be described in detail later.

The display driver 38 sequentially inputs the image data corresponding to one frame, which has been subjected to the image processing by the image data processing unit 37, to the display 22 or the electronic view finder 23. For example, the display 22 sequentially displays the live view image with a predetermined period. The display 22 is capable of a touch operation, and an operation and selection corresponding to an operation icon (not shown) displayed on the display 22 are executed by performing the touch operation on the operation icon.

A card interface (I/F) 41 is incorporated in a card slot (not shown) provided in the camera body 11 and is electrically connected to a memory card 42 inserted in the card slot. Specifically, the card I/F 41 stores the image data subjected to the image processing by the image data processing unit 37 in the memory card 42. Further, in a case where the image data stored in the memory card 42 is reproduced and displayed, the card I/F 41 reads out the image data from the memory card 42. Furthermore, the image recording unit is not limited to the configuration in which the image data is recorded in a recording medium, such as a memory card, and may be a recording device such as a solid state drive (SSD).

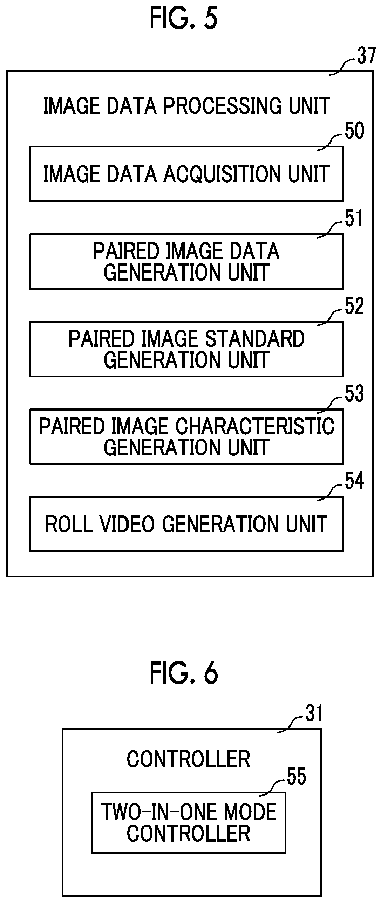

Hereinafter, the two-in-one mode, processing related to the two-in-one mode, and the like will be described in detail. As shown in Fig. 5, the controller 31 is a processor, and executes a program in a program memory (not shown) to realize functions of an image data acquisition unit 50, a paired image data generation unit 51, a paired image standard generation unit 52, a paired image characteristic generation unit 53, and a roll video generation unit 54 in the image data processing unit 37. In addition, as shown in Fig. 6, the controller 31 realizes the function of the two-in-one mode controller 55 in the controller 31 by executing the program in the program memory.

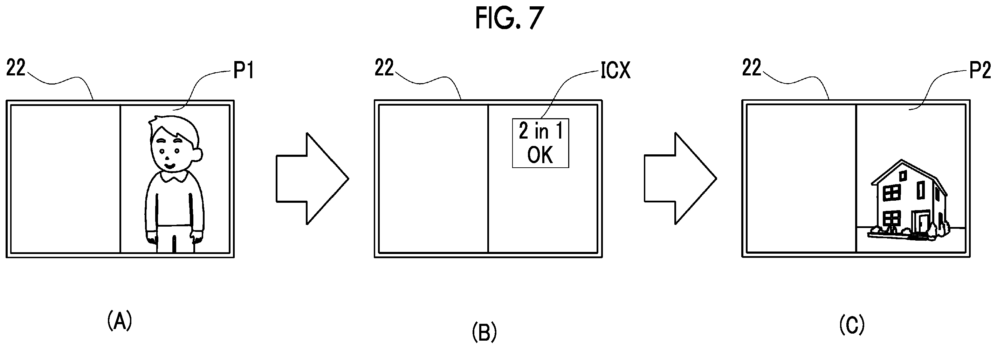

The image data acquisition unit 50 acquires both of the two pieces of first image data and second image data used for generating the paired image data by imaging both of the two pieces of first image data and second image data via the imaging apparatus 10. Specifically, as shown in (A) of Fig. 7, the first image data of the first image P1 is acquired in response to the operation of the release switch 15. In this state, as shown in (B) of Fig. 7, a transition-available icon ICX indicating that the transition to the two-in-one mode is available is displayed on the display 22. Then, in a case where the transition-available icon is displayed, the lever 17 is pulled from the normal position (refer to (B) of Fig. 3) to transition to the two-in-one mode. Then, as shown in (C) of Fig. 7, the second image data of the second image P2 is acquired by operating the release switch 15 in the two-in-one mode. As described above, the first image data and the second image data are obtained. In addition, as will be described later, the paired image data is generated based on the first image data and the second image data.

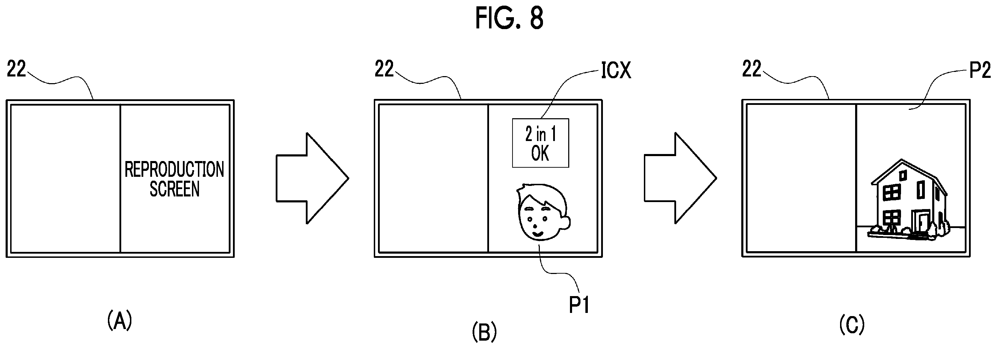

In addition, the image data acquisition unit 50 may acquire two pieces of the first image data and the second image data used for generating the paired image data, one of which is image data optionally selected from among the captured image data. Specifically, as shown in (A) of Fig. 8, the display 22 is switched to a reproduction screen, and an image of the captured image data is displayed on the reproduction screen. The user selects the first image data used to generate the paired image data from the image data of the captured image displayed on the reproduction screen. It is preferable that the selection of the first image data is performed by a touch operation or the like of the display 22.

As shown in (B) of Fig. 8, by the selection of the first image data, the first image P1 of the selected first image data and the transition-available icon ICX are displayed on the display 22. Then, in a case where the transition-available icon is displayed, the user performs an operation of pulling the lever 17 to transition to the two-in-one mode. Then, as shown in (C) of Fig. 8, the second image data of the second image P2 is acquired by operating the release switch 15 in the two-in-one mode. As described above, the first image data and the second image data are obtained.

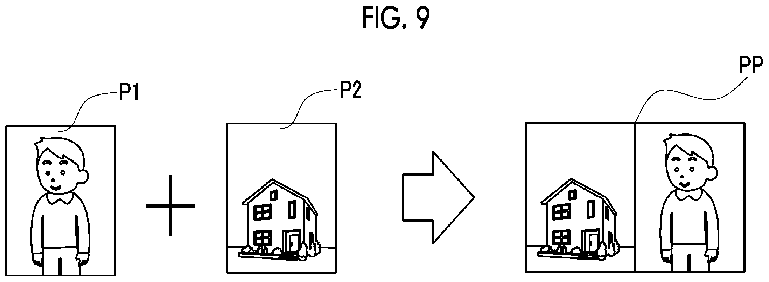

The paired image data generation unit 51 generates paired image data (third image data) which is a set of image data from at least the first image data and the second image data. The paired image data is image data in which the first image data and the second image data are displayed in parallel on the display 22. Specifically, as shown in Fig. 9, the paired image data of the paired image PP in which the first image P1 and the second image P2 are combined is generated from the first image data of the first image P1 and the second image data of the second image P2 obtained by the image data acquisition unit 50.

In the generated paired image data, the first image data and the second image data have different standards or characteristics. Therefore, in a case where the image of the paired image data is viewed by the user, there is a concern that a sense of discomfort may occur. Therefore, the paired image standard generation unit 52 or the paired image characteristic generation unit 53 generates the paired image standard or the paired image characteristic as an image that can be viewed by the user without a sense of discomfort. Then, the standard or the characteristic of the paired image data is set based on the paired image standard or the paired image characteristic.

The paired image standard generation unit 52 generates a paired image standard (third standard) based on the first standard of the first image data and the second standard of the second image data. In the paired image data, the first image data and the second image data are each one image data determined by the paired image standard. It is preferable that the first standard, the second standard, and the paired image standard include at least one of an image format or an image file format.

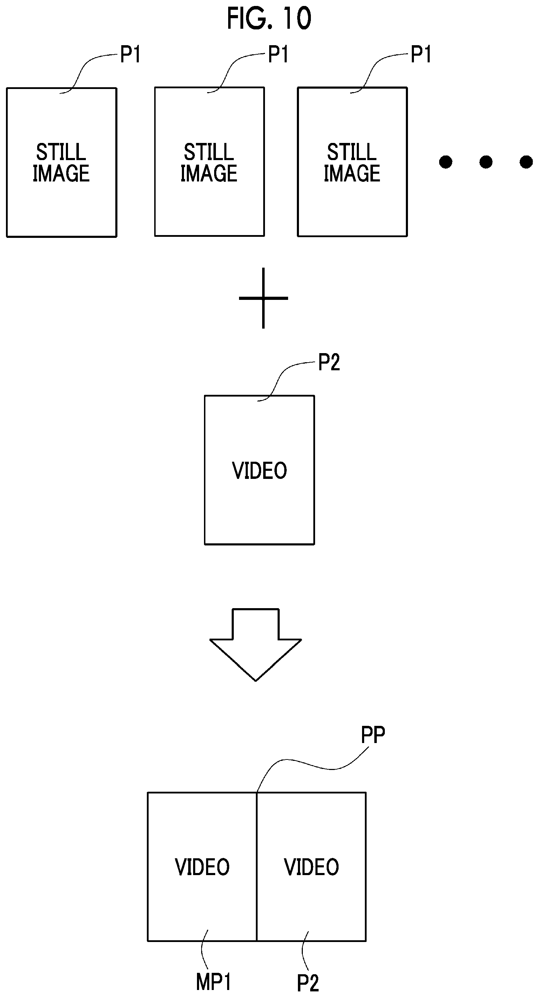

Specifically, in a case where the first standard and the second standard are different from each other, the paired image standard generation unit 52 matches the paired image standard with either the first standard or the second standard, or changes the paired image standard to a standard different from the first standard and the second standard. For example, in a case where the paired image standard is matched to either the first standard or the second standard, it is preferable that one of the first standard or the second standard is a still image and the other is a video. In a case where the paired image standard is a video, it is preferable to duplicate the first image P1, which is a still image of the first standard, a predetermined number of times and combine the duplicated first images P1 to match the video MP1. In this case, as shown in Fig. 10, the paired image data PP is composed of data of the video MP1 that is set as a video of the third standard and obtained by being combined, and second image data that is the second image P2 of the video of the second standard. On the other hand, in a case where the paired image standard is a still image, it is preferable that any frame image optionally selected from the video of the first standard is used as the still image. In this case, the paired image is displayed on the display 22 in parallel with the optionally selected frame image and the still image of the second standard.

As the image file format in a case where the paired image standard is set to either the first standard or the second standard, it is preferable that, in a case where the still image of the first standard is JPEG and the video of the second standard is MOV, the paired image standard is set to MOV of the second standard, or in a case where the video of the first standard is MOV and the still image of the second standard is JPEG, the paired image standard is set to JPEG of the second standard. In addition, as the image file format in a case where the paired image standard is changed to a standard different from the first standard and the second standard, it is preferable that, in a case where both the still image of the first standard and the still image of the second standard are JPEG, the paired image standard is set to PNG, or in a case where the video of the first standard is MOV and the still image of the second standard is JPEG, the paired image standard is set to AVI. In addition, as image file format in a case where the paired image standard is the same as the first standard and the second standard, it is preferable that the first standard, the second standard, and the paired image standard are set to JPEG.

The paired image characteristic generation unit 53 generates a paired image characteristic (third characteristic) of the paired image data based on the first characteristic of the first image data and the second characteristic of the second image data. It is preferable that the first characteristic, the second characteristic, and the paired image characteristic are specifications of the image data and include at least one of an aspect ratio, an image size, a resolution, a frame rate, a bit rate, or a recording time.

Specifically, in a case where the first characteristic of the first image data and the second characteristic of the second image data are different from each other, the paired image characteristic generation unit 53 matches the paired image characteristic of the paired image data with either the first characteristic or the second characteristic, or changes the paired image characteristic of the paired image data to a characteristic different from the first characteristic and the second characteristic. In this case, it is preferable to perform at least one of the aspect ratio change, the bit rate change, the recording time change, or the frame rate change on at least one of the first characteristic or the second characteristic.

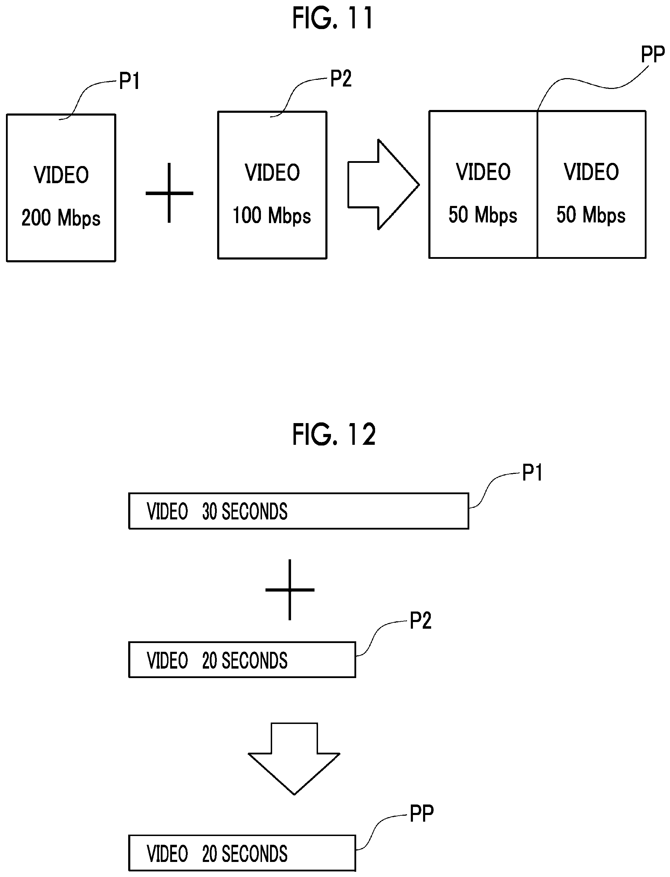

For example, in a case where the paired image characteristic generation unit 53 performs the bit rate change, it is preferable that the bit rate determined by the paired image characteristic is set to be equal to or less than the bit rate determined by the first characteristic or the second characteristic. As shown in Fig. 11, in a case where the bit rate of the video of the first image P1 determined by the first characteristic is 200 mega bits per second (Mbps) and the bit rate of the video of the second image P2 determined by the second characteristic is 100 Mbps, it is preferable that the bit rate of the video of the paired image P2 determined by the paired image characteristic is 50 Mbps. By reducing the bit rate in this way, it is possible to compress the file size of the paired image data. On the other hand, in a case where the bit rate of the first characteristic or the second characteristic is maintained even with the paired image characteristic, the image quality of the paired image data can be maintained.

In addition, in a case where the recording time is changed, it is preferable that the paired image characteristic generation unit 53 sets the recording time determined by the paired image characteristic to be equal to or shorter than the recording time determined by the first characteristic or the second characteristic. As shown in Fig. 12, in a case where the recording time of the video of the first image P1 determined by the first characteristic is 30 seconds and the recording time of the video of the second image P2 determined by the second characteristic is 20 seconds, it is preferable to set the recording time of the video of the paired image PP determined by the paired image characteristic to 20 seconds. In this case, a part of the video of the first standard is cut out, and the recording time is edited to 20 seconds. As a result, it is possible to combine videos with different recording times and to compress the file size of the paired image data after the combination.

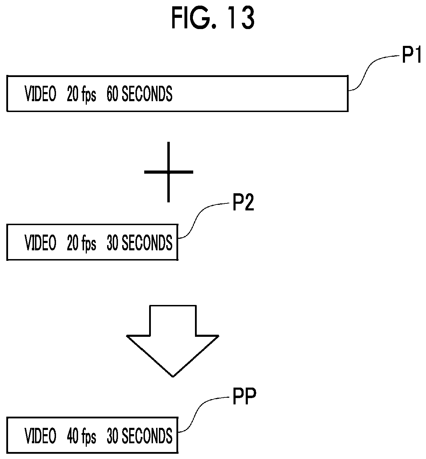

In addition, in a case where the frame rate is changed, it is preferable that the paired image characteristic generation unit 53 matches at least one of the frame rate determined by the first characteristic or the frame rate determined by the second characteristic with the paired image characteristic. As shown in Fig. 13, in a case where the frame rate of the video of the first image P1 determined by the first characteristic is 20 frames per second (fps) and the recording time is 60 seconds, and the frame rate of the video of the second image P2 determined by the second characteristic is 20 fps and the recording time is 30 seconds, it is preferable that the frame rate of the video of the paired image PP determined by the paired image characteristic is 40 fps and the recording time is 30 seconds.

In this case, for the video of the first characteristic (first image data), by setting the frame rate from 20 fps to 40 fps, the video is edited from a video having a recording time of 60 seconds to a video having a recording time of 30 seconds. On the other hand, for the video of the second characteristic (second image data), by continuously using the same frame for two frames within 30 seconds of the same recording time, the video is edited from a video having 20 fps of frame rate to a video having 40 fps of frame rate. By combining the video of the first characteristic and the video of the second characteristic edited as described above, a video (video of the paired image characteristic) of 40 fps and a recording time of 30 seconds is obtained. In such a case of changing the frame rate, it is not necessary to thin out the frames of the video unlike in a case of shortening the recording time, and thus a video with smooth motion can be obtained.

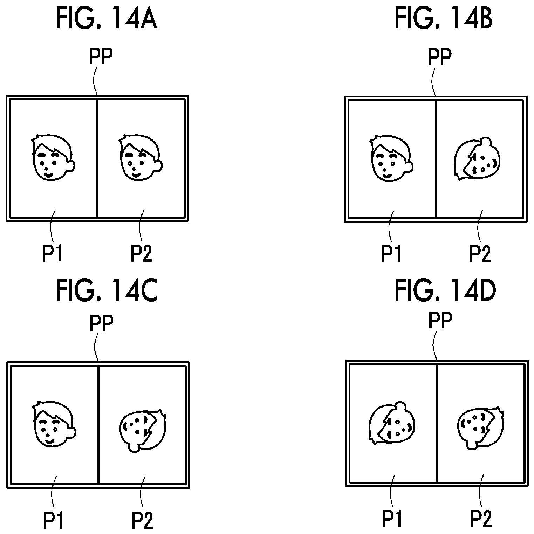

In a case of generating the paired image data, it is preferable that the paired image characteristic generation unit 53 maintains the orientation of the image determined by the first image data and the orientation of the image determined by the second image data. Specifically, as shown in Fig. 14A, in a case where the orientation of the image of the first image P1 in the first image data is normal and the orientation of the second image P2 in the second image data is also normal, the orientation of each of the first image P1 and the second image P2 is maintained normal in the paired image PP of the paired image data. In addition, as shown in Fig. 14B, in a case where the orientation of the first image P1 in the first image data is normal and the orientation of the second image P2 in the second image data is the right 90-degree rotation direction, in the paired image PP of the paired image data, the orientation of the first image P1 is maintained normal and the orientation of the second image P2 is maintained in the right 90-degree rotation direction.

In addition, as shown in Fig. 14C, in a case where the orientation of the first image P1 in the first image data is normal and the orientation of the second image P2 in the second image data is the left 90-degree rotation direction, in the paired image PP of the paired image data, the orientation of the first image P1 is maintained normal and the orientation of the second image P2 is maintained in the left 90-degree rotation direction. In addition, as shown in Fig. 14D, in a case where the orientation of the first image P1 in the first image data is the right 90-degree rotation direction and the orientation of the second image P2 in the second image data is the left 90-degree rotation direction, in the paired image PP of the paired image data, the orientation of the first image P1 is maintained in the right 90-degree rotation direction and the orientation of the second image P2 is maintained in the left 90-degree rotation direction.

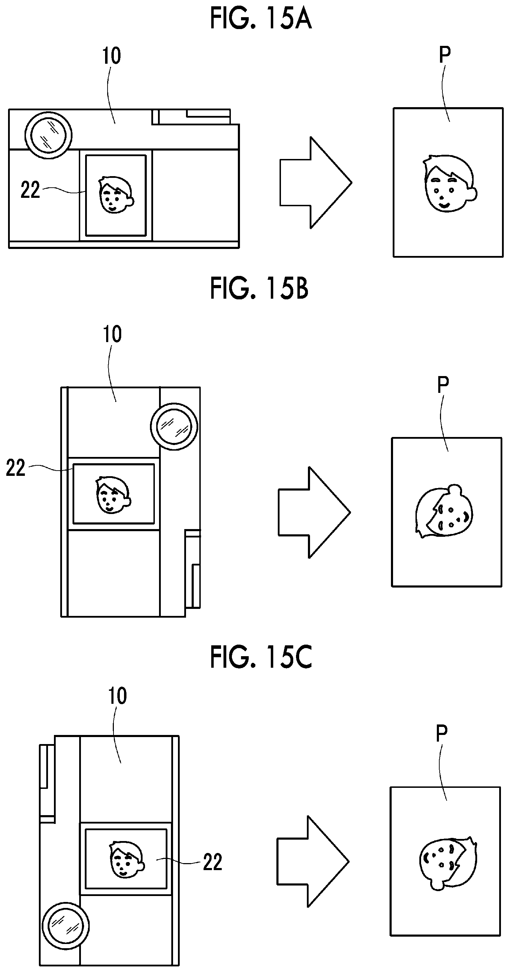

The normal orientation of the image refers to the orientation of the image P obtained in a case where the horizontally long imaging apparatus 10 is imaged in a horizontally long state as shown in Fig. 15A. In addition, the orientation of the image in the right 90-degree rotation direction refers to an orientation of an image obtained in a case where the horizontally long imaging apparatus 10 is rotated clockwise by 90 degrees and an image is captured in a vertically long state as shown in Fig. 15B. In addition, the orientation of the image in the left 90-degree rotation direction refers to an orientation of an image obtained in a case where the horizontally long imaging apparatus 10 is rotated counterclockwise by 90 degrees and an image is captured in a vertically long state as shown in Fig. 15C.

It is preferable that the paired image characteristic generation unit 53 performs at least one processing of background addition, cropping, or enlargement or reduction based on the first characteristic and the second characteristic on at least one of the first image data or the second image data. These processes are used to match the image size of the still image or the video of the first image P1 or the second image P2 with the image size of the first image P1 or the second image P2 in the paired image.

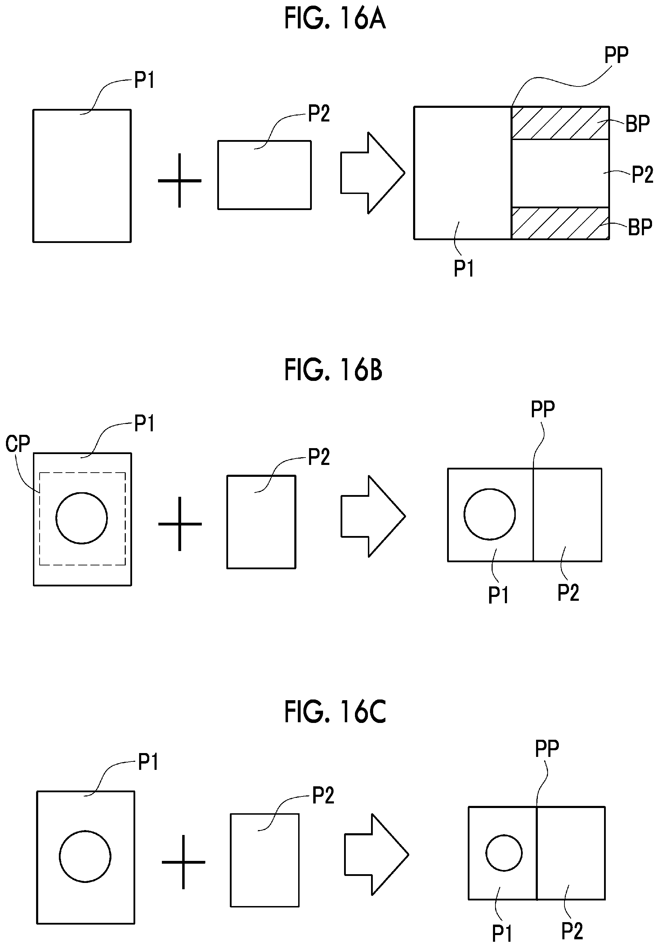

Specifically, as shown in Fig. 16A, in a case where the paired image data of the paired image PP is generated from the first image data of the first image P1 and the second image data of the second image P2 each having different image sizes, for the background processing, processing of adding a background image BP to a blank portion generated in a case where the image size of the second image P2 is matched with the image size of the first image P1 is performed.

In addition, as shown in Fig. 16B, in the crop processing, in order to match the image size of the first image P1 to the image size of the second image P2, processing of cropping the first image P1 to the image size of the second image P2 to acquire the first image data is performed at the time of acquiring the first image data. The region CP represents a region to be cropped. In this case, the image size can be reduced while maintaining the image size of the object in the first image P1. In addition, as shown in Fig. 16C, in the processing of reducing the image size, the image size of the first image data is reduced in order to match the image size of the first image P1 with the image size of the second image P2. In this case, the image size of the object in the first image P1 is reduced in accordance with the reduction of the image size.

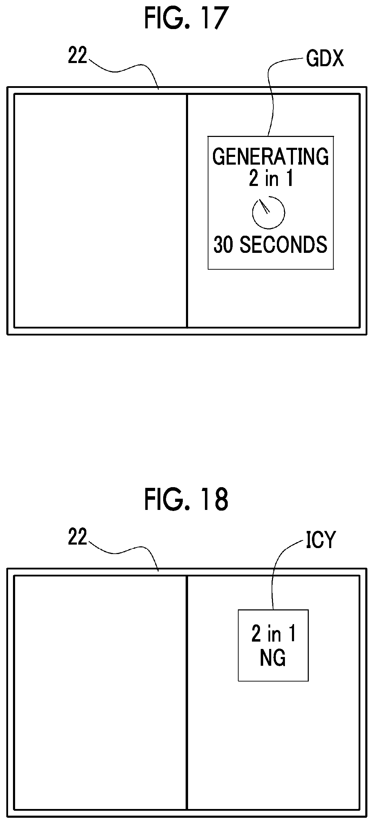

Control performed at the time of generating the paired image data will be described below. The two-in-one mode controller 55 outputs information related to a processing time for generation in a case of generating the paired image data. Specifically, in a case where the release switch 15 is operated in the two-in-one mode, the second image data is obtained, and the generation of the paired image data is started. As shown in Fig. 17, a guidance GDX indicating that the paired image data is being generated, and a time until the completion of the generation of the paired image data is displayed on the display 22 in accordance with the start of the generation of the paired image data.

In addition, in a case where any of the first image data or the second image data is not present, or in a case where the first image data or the second image data is the paired image data, two-in-one mode controller 55 does not generate the paired image data. The case where any of the first image data or the second image data is not present includes a case where the first image data or the second image data is not stored in the memory card 42 and a case where the first image data or the second image data is not stored in the memory for partial storage in the imaging apparatus 10. Specifically, in a case where any of the first image data or the second image data is not present, or in a case where the first image data or the second image data is the paired image data, as shown in Fig. 18, a transition-unavailable icon ICY indicating that the transition to the two-in-one mode is impossible is displayed on the display 22. In this case, even in a case where the operation of pulling the lever 17 is performed, the transition to the two-in-one mode is not performed. In a case where any of the first image data or the second image data is present, the generation of the paired image data is permitted.

The reproduction of the paired image data will be described below. In a case where two-in-one mode controller 55 outputs the paired image data to the display 22 (display screen), the first image of the first image data and the second image of the second image data are switched and displayed on the display 22. In addition, while switching between the display of the first image and the display of the second image, one of the first image and the second image is slid in, and the other is slid out to be displayed on the display screen.

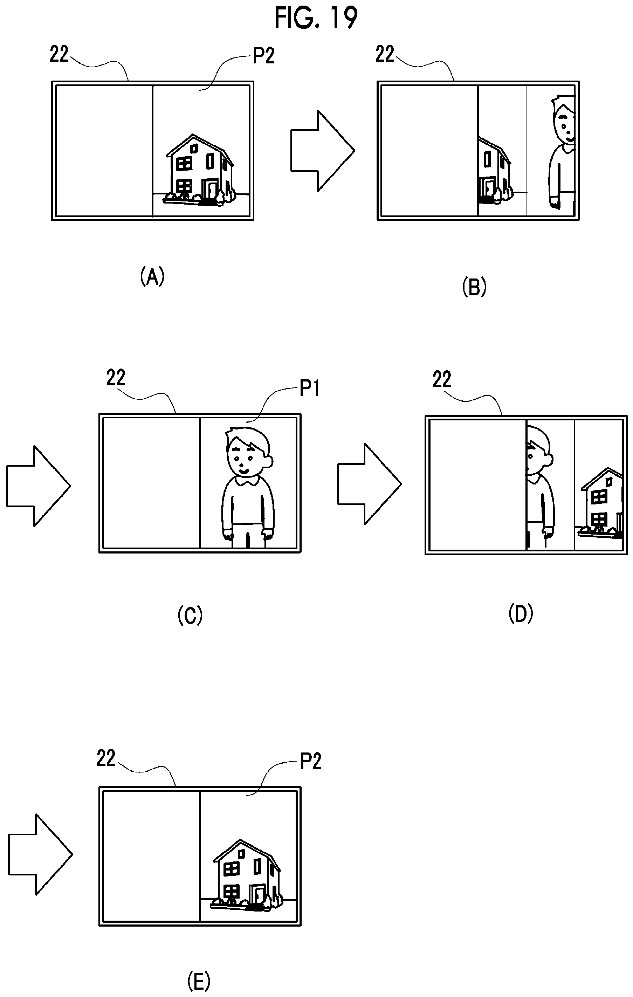

Specifically, as shown in (A) of Fig. 19, in a case where the second image P2 is displayed on the display 22, the user performs an operation of pushing the lever 17 from the normal position (refer to (C) of Fig. 3). Accordingly, as shown in (B) of Fig. 19, the first image P1 slides in on the display 22, and the second image P2 slides out from the display 22. As shown in (C) of Fig. 19, the image displayed on the display 22 is switched to the first image P1 by continuing the operation of pushing the lever 17. Then, in a case where the operation of pushing the lever 17 is released, as shown in (D) of Fig. 19, the first image P1 slides out from the display 22, and the second image P2 slides into the display 22. Then, in a case where the lever 17 returns to the normal position (refer to (A) of Fig. 3), the image displayed on the display 22 is switched to the second image as shown in (E) of Fig. 19.

The generation of the roll video will be described below. The roll video generation unit 54 combines a plurality of pieces of still image data to generate video data which is a set of video. It is preferable that the video data is image data for scrolling a plurality of pieces of still image data in a specific direction within a specific time with respect to the display 22.

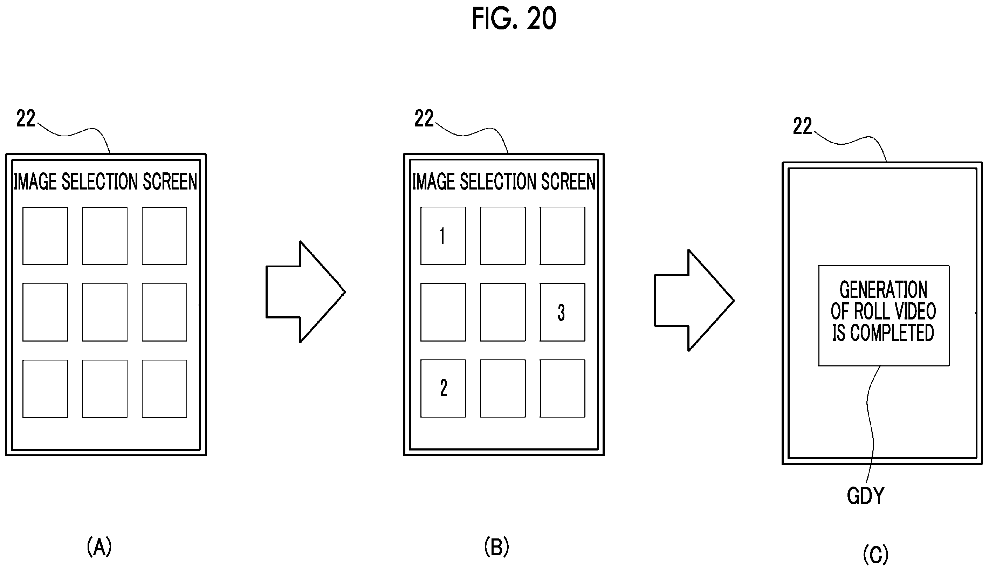

Specifically, in a case where the mode dial 14 is operated to be set to the roll video mode, an image selection screen is displayed on the display 22 as shown in (A) of Fig. 20. A plurality of still images are displayed on the image selection screen. Then, as shown in (B) of Fig. 20, the still image to be used for the roll video is selected from the still images in the image selection screen by tapping the display 22 or the like. Numbers are displayed on the selected still images in the order of selection. In a case where the selection is completed, the generation of the roll video is started. In a case where the generation of the roll video is completed, as shown in (C) of Fig. 20, guidance GDY indicating that the generation of the roll video is completed is displayed. In a case where the generated roll video is played, for example, three still images are displayed on the display 22 while being scrolled in a direction from left to right in 30 seconds.

In the above-described embodiment, the paired image data generation unit 51 and the paired image characteristic generation unit 53 may generate the paired image data with the paired image aspect ratio (third aspect ratio) from the first image data with the first aspect ratio and the second image data with the second aspect ratio. In this case, the ratios of the first aspect ratio, the second aspect ratio, and the paired image aspect ratio in the horizontal direction are the same, and it is preferable that the paired image data is a still image in a case where both the first image data and the second image data are still images, and it is preferable that the paired image data is a video in a case where at least one of the first image data or the second image data is a video. The case where the ratios of the first aspect ratio, the second aspect ratio, and the paired image aspect ratio in the horizontal direction are the same include a case where there is a slight difference between the ratios in the horizontal direction, in addition to a case where the ratios in the horizontal direction are completely the same.

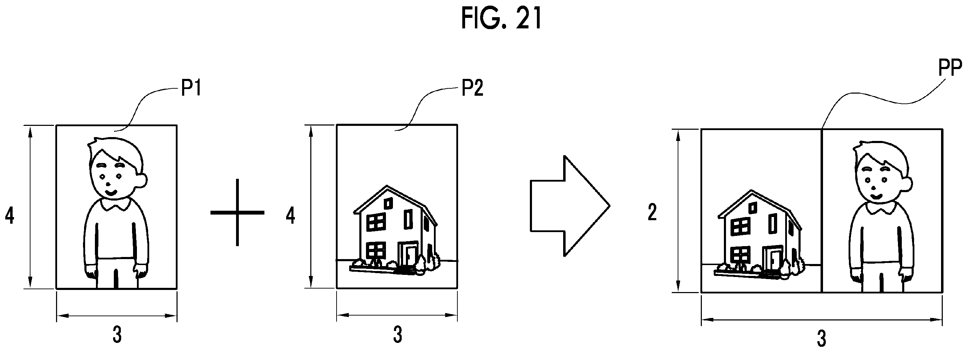

Specifically, as shown in Fig. 21, in a case where the first aspect ratio of the first image P1 is 3:4 (horizontal: vertical) and the second aspect ratio of the second image P2 is 3:4 (horizontal: vertical), it is preferable that the ratio of the first aspect ratio and the second aspect ratio in the horizontal direction is set to 3, which is the same as above, and the aspect ratio for the paired image aspect ratio of the paired image PP is set to 3:2.

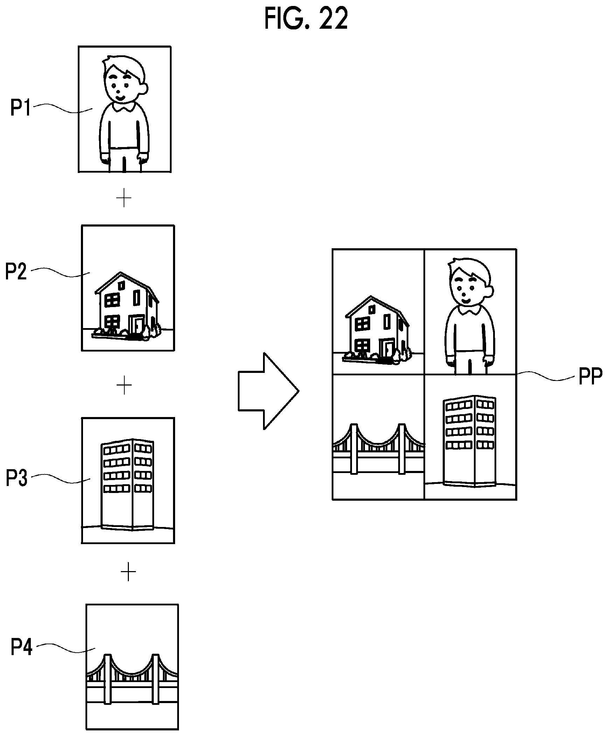

In the above-described embodiment, the paired image data is generated from two pieces of image data of the first image data and the second image data, but three or more pieces of image data including the first image data and the second image data may be a set of image data as multi-image data (third image data). Specifically, as shown in Fig. 22, the multi-image data is generated based on the third image data of the third image P3 and the fourth image data of the fourth image P4 in addition to the first image data of the first image P1 and the second image data of the second image P2. In this case, the multi-image data is stored as one image data.

In the present embodiment, each processing is executed by any computer. In addition, any computer may execute these processes by a processor, a program, or a combination thereof. Any computer may be a general-purpose computer, a computer for a specific use, a system such as a workstation, or other hardware elements capable of executing a program.

The processor may be configured by one or a plurality of hardware, and the type of hardware is not limited. For example, the processor may be configured by a programmable logic device such as a central processing unit (CPU), a micro processing unit (MPU), or a field programmable gate array (FPGA), a dedicated circuit for executing specific processing such as an application specific integrated circuit (ASIC), or hardware such as a graphic processing unit (GPU) or a neural processing unit (NPU). In addition, the processor has each unit or each means that executes various types of processing in the present embodiment. In addition, the types of hardware may be a combination of different types of hardware. In a case where a plurality of hardware are configured to execute one or a plurality of processes of a certain processor, the plurality of hardware may be present in devices physically separated from each other, or may be present in the same device. In addition, in any of the embodiments, the order of each processing by the processor is not limited to the above order and may be appropriately changed. The hardware is configured by an electric circuit (circuitry) in which circuit elements such as semiconductor elements are combined.

Further, the present embodiment may be realized by hardware, software, firmware, microcode, or a combination thereof. Software, firmware, and microcode are configured by a program. In addition, the program may be, for example, a program module group, and each function thereof may be realized by a processor configured to execute each function. The program may be a program code or a plurality of code segments stored in one or a plurality of non-transitory computer-readable media (for example, a storage medium or other storage). The program may be divided and stored in a plurality of non-transitory computer-readable media existing in devices physically separated from each other. The program code or the code segment may represent any combination of procedures, functions, subprograms, routines, subroutines, modules, software packages, classes, or commands, data structures, or program statements. The program code or the code segment may be connected to another code segment or a hardware circuit by transmitting and receiving information, data, an argument, a parameter, or a content of a memory.

Each processing or each function is realized by the image data acquisition unit 50, the paired image data generation unit 51, the paired image standard generation unit 52, the paired image characteristic generation unit 53, the roll video generation unit 54, and the two-in-one mode controller 55 in the above-described embodiment.

In each of the above-described embodiments, the digital camera in which the imaging optical system 13 is fixed to the camera body 11 is given as an example. However, the present invention is not limited thereto and may be applied to a digital interchangeable lens camera in which the imaging optical system is interchangeable with respect to the camera body. Further, in each of the above-described embodiments, the lens barrel 12 that does not have a zoom lens is given as an example. However, the present invention is not limited thereto, and the imaging optical system 13 may include a zoom lens. In addition, the present invention can be applied to smartphones and cameras, such as video cameras, in addition to the digital camera.

### Explanation of References

10: digital camera
11: camera body
11A: grip
12: lens barrel
13: imaging optical system
14: mode dial
15: release switch
16: power switch
17: lever
18: flash device
19: illumination device
21: imaging element
22: display
23: electronic view finder
31: controller
32: shutter unit
33: shutter motor
34: motor driver
35: image memory
36: bus line
37: image data processing unit
38: display driver
41: card interface (I/F)
42: memory card
50: image data acquisition unit
51: paired image data generation unit
52: paired image standard generation unit
53: paired image characteristic generation unit
54: roll video generation unit
55: two-in-one mode controller
CL: central axis
OA: optical axis
P1: first image
P2: second image
PP: paired image
MP1: video
P: image
ICX: transition-available icon
ICY: transition-unavailable icon
BP: background image
CP: region
GDX, GDY: guidance

## Claims

1. An information processing apparatus comprising:
a processor,
wherein the processor is configured to:
generate third image data, which is a set of image data, from at least first image data and second image data; and
generate a third standard for the third image data based on a first standard of the first image data and a second standard of the second image data.

2. The information processing apparatus according to claim 1,
wherein the set of image data is one piece of image data.

3. The information processing apparatus according to claim 1 or 2,
wherein the set of image data is image data in which three or more pieces of image data, including the first image data and the second image data, are configured as one set.

4. The information processing apparatus according to any one of the preceding claims,
wherein the third image data is image data in which the first image data and the second image data are displayed in parallel on a display screen.

5. The information processing apparatus according to any one of the preceding claims,
wherein the processor is configured to:
in a case where the first standard and the second standard are different from each other,
match the third standard to either the first standard or the second standard; or change the third standard to a standard that is different from both the first and second standards.

6. The information processing apparatus according to any one of the preceding claims,
wherein the first standard, the second standard, and the third standard include at least one of: an image format or an image file format.

7. The information processing apparatus according to claim 6,
wherein, in a case where the processor matches the third standard to either the first standard or the second standard,
one of the first and second standards corresponds to a still image, and the other to a video.

8. The information processing apparatus according to claim 7,
wherein the processor is configured to:
in a case where the third standard corresponds to a video,
duplicate the still image a predetermined number of times, and combine the duplicated still images to match the video.

9. The information processing apparatus according to any one of the preceding claims,
wherein the processor is configured to:
in a case where a first characteristic of the first image data and a second characteristic of the second image data are different from each other,
match a third characteristic of the third image data to either the first characteristic or the second characteristic; or change the third characteristic to a third characteristic different from the first characteristic and the second characteristic.

10. The information processing apparatus according to claim 9,
wherein the first characteristic, the second characteristic, and the third characteristic are specifications of image data, and
the first characteristic, the second characteristic, and the third characteristic include at least one of an aspect ratio, an image size, a resolution, a frame rate, a bit rate, and a recording time.

11. The information processing apparatus according to claim 9 or 10,
wherein the processor is configured to:
perform at least one of an aspect ratio change, a bit rate change, a recording time change, and a frame rate change, on at least one of the first characteristic and the second characteristic.

12. The information processing apparatus according to any one of claims 9 to 11,
wherein the processor is configured to:
perform at least one processing of background addition, cropping, and enlargement and reduction based on the first characteristic and the second characteristic, on at least one of the first image data and the second image data.

13. The information processing apparatus according to claim 11 or 12,
wherein the processor is configured to:
in a case where the bit rate change is performed, set a bit rate determined by the third characteristic to be equal to or less than a bit rate determined by the first characteristic or the second characteristic.

14. The information processing apparatus according to any one of claims 11 to 13,
wherein the processor is configured to:
in a case where the recording time change is performed, set a recording time determined by the third characteristic to be equal to or shorter than a recording time determined by the first characteristic or the second characteristic.

15. The information processing apparatus according to any one of claims 11 to 14,
wherein the processor is configured to:
in a case where the frame rate change is performed, match at least one of a frame rate determined by the first characteristic or a frame rate determined by the second characteristic with the third characteristic.

16. The information processing apparatus according to any one of the preceding claims,
wherein the processor is configured to:
in a case of generating the third image data, maintain an orientation of an image determined by the first image data and an orientation of an image determined by the second image data.

17. The information processing apparatus according to any one of the preceding claims,
wherein the processor is configured to:
in a case of generating the third image data,
output information related to a processing time for the generation.

18. The information processing apparatus according to any one of the preceding claims,
wherein, in a case where the first image data or the second image data is not present, or the first image data or the second image data is the set of image data,
the processor does not generate the third image data.

19. The information processing apparatus according to any one of the preceding claims,
wherein the processor is configured to:
in a case where the third image data is output to a display screen, switch and display, on the display screen, a first image of the first image data and a second image of the second image data.

20. The information processing apparatus according to claim 19,
wherein the processor is configured to:
display, on the display screen, one of the first image and the second image by sliding in, and the other by sliding out, while switching between the display of the first image and the display of the second image.

21. The information processing apparatus according to any one of the preceding claims,
wherein the processor is configured to:
generate video data, which is a set of video, by combining a plurality of pieces of still image data in a case where a mode is set to a second mode, and
the video data is image data for scrolling the plurality of pieces of still image data in a specific direction within a specific time with respect to a display screen.

22. An imaging apparatus comprising the information processing apparatus according to any one of claims 1 to 21.

23. The imaging apparatus according to claim 22, further comprising:
a first mode,
wherein the processor is configured to:
in a case where a transition to the first mode is performed, generate the third image data.

24. The imaging apparatus according to claim 23,
wherein the first mode is a mode for generating the set of image data from a plurality of pieces of image data.

25. The imaging apparatus according to claim 22,
wherein the processor is configured to:
in a case of generating the third image data,
acquire both the first image data and the second image data by capturing the first and second images with the imaging apparatus.

26. The imaging apparatus according to claim 22,
wherein, in a case where the processor generates the third image data,
one of the first image data or the second image data is an image optionally selected from captured image data.

27. An imaging apparatus comprising:
a processor,
wherein the processor is configured to:
generate third image data with a third aspect ratio from first image data with a first aspect ratio and second image data with a second aspect ratio,
ratios of the first aspect ratio, the second aspect ratio, and the third aspect ratio in a horizontal direction are the same, and
the third image data
is a still image in a case where both the first image data and the second image data are still images, and
is a video in a case where at least one of the first image data or the second image data is a video.

28. The imaging apparatus according to claim 27,
wherein the first aspect ratio and the second aspect ratio are 3:4, and
the third aspect ratio is 3:2.
